# EUROPEAN PATENT APPLICATION

(11) **EP 4 674 246 A1**
(43) Date of publication of application: **07.01.2026**
(21) Application number: 25179399.8
(22) Date of filing: 28.05.2025
(51) Int. Cl.: A01D 34/00, G06V 10/82, G06V 20/10, G06V 20/56

(54) **IMPROVED OPERATION FOR A ROBOTIC LAWNMOWER WITH REGARDS TO NEWLY-SOWN GRASS**

(30) Priority: 02.07.2024 SE 2450747
(71) Applicant: Husqvarna AB, 561 82 Huskvarna (SE)
(72) Inventor: Mansfeld, Pontus, 561 82 Huskvarna (SE); Johansson, Hugo, 561 82 Huskvarna (SE); Berkman, Anton, 561 82 Huskvarna (SE)

(57) **Abstract**

A method for use in a robotic lawnmower system comprising a robotic lawnmower (100) arranged to operate in an outdoor operational area (205), and the robotic lawnmower comprising a vision sensor (185), and wherein the method comprises:
detecting (420) an area of newly-sown grass (310) by receiving sensor data from the vision sensor (185) and perform analysis on the sensor data in order to detect newly-sown grass, and
adapting (430) its operation for the area of newly-sown grass (310).

## Description

### TECHNICAL FIELD

This application relates to a robotic lawnmower and a method for providing a more efficient cutting of newly-sown grass.

### BACKGROUND

Automated or robotic lawnmowers are becoming increasingly more popular and so is the use of the robotic lawnmower in various types of operational areas having lawns. Due to many different reasons some areas of a lawn or operational area in general may have newly-sown grass on it, for example due to expansion of the lawn, repair of the lawn or to fil in where some digging (or other work) has been performed, such as removing a bush. Such areas may not be well-served by being operated in the same manner as other areas. There is thus a need to handle such areas.

### SUMMARY

It is therefore an object of the teachings of this application to overcome or at least reduce those problems by providing a robotic lawnmower system comprising a robotic lawnmower arranged to operate in an outdoor operational area, and the robotic lawnmower comprising a vision sensor and a controller, wherein the controller is configured to detect an area of newly-sown grass by receiving sensor data from the vision sensor and perform analysis on the sensor data in order to detect newly-sown grass, and adapt its operation for the area of newly-sown grass.

It is also an object of the teachings of this application to overcome the problems by providing a method for use in a robotic lawnmower system comprising a robotic lawnmower arranged to operate in an outdoor operational area, and the robotic lawnmower comprising a vision sensor, and wherein the method comprises: detecting an area of newly-sown grass by receiving sensor data from the vision sensor and perform analysis on the sensor data in order to detect newly-sown grass, and adapting its operation for the area of newly-sown grass.

Further embodiments and aspects are as in the attached patent claims and as discussed in the detailed description.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to performed in the exact order disclosed, unless explicitly stated.

### BRIEF DESCRIPTION OF THE DRAWINGS

The invention will be described in further detail under reference to the accompanying drawings in which:
Figure 1 shows a schematic view of the components of an example of a robotic lawnmower according to some example embodiments of the teachings herein;
Figure 2 shows a schematic view of a robotic lawnmower system according to some example embodiments of the teachings herein;
Figure 3A, 3B, 3C, 3D and 3E each shows a schematic view of a robotic lawnmower system according to some example embodiments of the teachings herein; and
Figure 4 shows a corresponding flowchart for a method according to some example embodiments of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

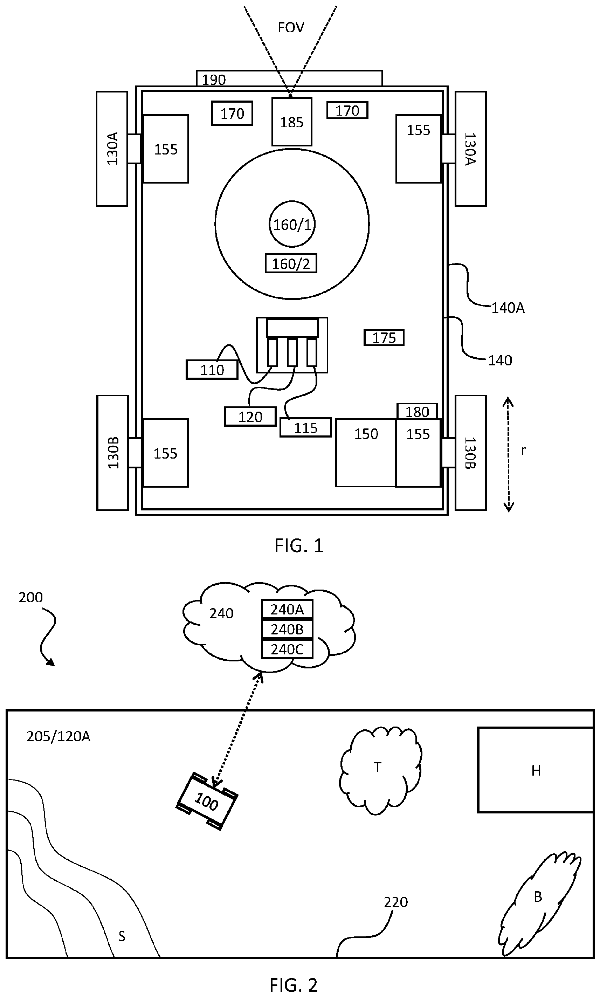

Figure 1 shows a schematic overview of a robotic lawnmower 100. The robotic lawnmower 100 may be a multi-chassis type or a mono-chassis type (as in figure 1). A multi-chassis type comprises more than one main body parts that are movable with respect to one another. A mono-chassis type comprises only one main body part.

It should be noted that robotic lawnmower may be of different sizes, where the size ranges from merely a few decimetres for small garden robots, to even more than 1 meter for large robots arranged to service for example airfields.

It should also be noted that the robotic lawnmower is a self-propelled robotic lawnmower, capable of autonomous navigation within an outdoor operational area, where the robotic lawnmower propels itself across or around the outdoor operational area in a pattern (random or predetermined).

The robotic lawnmower 100 has a main body part 140, possibly comprising a chassis 140 and an outer shell 140A, and a plurality of wheels 130 (in this example four wheels 130, but other number of wheels are also possible, such as three or six).

The main body part 140 substantially houses all components of the robotic lawnmower 100. At least some of the wheels 130 are drivably connected to at least one electric motor 155 powered by a battery 150. It should be noted that even if the description herein is focused on electric motors, combustion engines may alternatively be used, possibly in combination with an electric motor. In the example of figure 1, each of the wheels 130 is connected to a common or to a respective electric motor 155 for driving the wheels 130 to navigate the robotic lawnmower 100 in different manners. The wheels, the motor 155 and possibly the battery 150 are thus examples of components making up a propulsion device. By controlling the motors 155, the propulsion device may be controlled to propel the robotic lawnmower 100 in a desired manner, and the propulsion device will therefore be seen as synonymous with the motor(s) 150. It should be noted that wheels 130 driven by electric motors is only one example of a propulsion system and other variants are possible such as caterpillar tracks.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion and navigation of the robotic lawnmower.

The controller 110 in combination with the electric motor 155 and the wheels 130 forms the base of a navigation system (possibly comprising further components) for the robotic lawnmower, enabling it to be self-propelled as discussed.

The controller 110 may be implemented using any suitable, available processor or Programmable Logic Circuit (PLC). The memory 120 may be implemented using any commonly known technology for computer-readable memories such as ROM, FLASH, DDR, or some other memory technology.

The robotic lawnmower 100 is further arranged with a wireless communication interface 115 for communicating with other devices, such as a server, a personal computer, a smartphone, the charging station, and/or other robotic lawnmowers. Examples of such wireless communication devices are Bluetooth^{®}, WiFi^{®} (IEEE802.11b), Global System Mobile (GSM) and LTE (Long Term Evolution), to name a few. The robotic lawnmower 100 may be arranged to communicate with a user equipment (not shown but will be regarded as being an example of a server, as an example of a connected device) as discussed in relation to figure 2 below for providing information regarding status, location, and progress of operation to the user equipment as well as receiving commands or settings from the user equipment. Alternatively or additionally, the robotic lawnmower 100 may be arranged to communicate with a server (referenced 240 in figure 2) for providing information regarding status, location, and progress of operation as well as receiving commands or settings.

The robotic lawnmower 100 also comprises a grass cutting device 160, such as a rotating blade 160/2 driven by a cutter motor 160/1. The grass cutting device may be set to a cutting hight by the controller 110, by raising or lowering the grass cutting device or only the rotating blade 160/1.

For enabling the robotic lawnmower 100 to navigate with reference to a wire, such as a boundary wire or a guide wire, emitting a magnetic field caused by a control signal transmitted through the wire, the robotic lawnmower 100 is, in some embodiments, configured to have at least one magnetic field sensor 170 arranged to detect the magnetic field and for detecting the wire and/or for receiving (and possibly also sending) information to/from a signal generator. In some embodiments, such a magnetic boundary is used to provide a border (not shown explicitly in figure 2, but deemed to be included in the boundary 220) enclosing an outdoor operational area (referenced 205 in figure 2).

In some embodiments the robotic lawnmower 100 comprises a satellite signal navigation sensor 175 configured to provide navigational information (such as position) based on receiving one or more signals from a satellite - possibly in combination with receiving a signal from a base station. In some embodiments the satellite navigation sensor is a GPS (Global Positioning System) device or other Global Navigation Satellite System (GNSS) device. In some embodiments the satellite navigation sensor 175 is a RTK sensor. This enables the robotic lawnmower to operate in an outdoor operational area bounded by a virtual border (not shown explicitly in figure 2 but deemed to be included in the boundary 220 irrespective whether a physical boundary is used or not).

The robotic lawnmower 100 also comprises deduced reckoning sensors 180. The deduced reckoning sensors may be odometers, accelerometers or other deduced reckoning sensors.

The robotic lawnmower comprises a vision sensor 185, possibly comprised in or connected to the deduced reckoning sensors 180 as a visual odometry sensor. In some embodiments, the visual sensor is a stereo-camera 185, wherein stereo relates to a camera having two Field-Of-Views (FOV). Such cameras have the benefit of being able to determine a distance to an object in the field of View. In some embodiments, the visual sensor is a mono-camera 185, wherein mono relates to a camera having a single Field-Of-View (FOV) in contrast to a stereo camera. Such cameras have the benefit of being cheap. In some embodiments the vision sensor 185 is a LIDAR sensor or a RADAR sensor.

The vision sensor 185 is, in some embodiments, configured to provide sensor data that may be analysed by an internal controller or the controller 110 (the internal controller seen to be comprised in the controller 110). The controller 110 is thus configured to receive the sensor data and perform analysis, such as image processing, thereon.

The controller 110 is also or alternatively, in some embodiments, configured to perform the analysis in order to provide navigation input. The robotic lawnmower 100 can thus navigate also or alternatively based on the vision sensor 185.

The controller 110 is also or alternatively, in some embodiments, configured to perform segmentation and object detection on the sensor data as part of the analysis, in order to classify the terrain (or surface condition) in front of the robotic lawnmower 100.

In some embodiments, the deduced reckoning sensors are comprised in the propulsion device, wherein a deduced reckoning navigation may be provided by knowing the current supplied to a motor and the time the current is supplied, which will give an indication of the speed and thereby distance for the corresponding wheel.

The deduced reckoning sensors 180, especially in combination with the visual odometry sensor 185, enables the robotic lawnmower to operate according to a map of the outdoor operational area. In some such embodiments, the navigation is based on SLAM, and in some embodiments, where a visual odometry sensor (such as a camera) 185 is utilized, the navigation is based on V-SLAM.

In some embodiments, the robotic lawnmower 100 also comprises one or more collision sensors 190 that enable the robotic lawnmower 100 to detect when the robotic lawnmower 100 has run into, i.e. collided with, an object. Such collision sensors are known in the art and will not require more detail. One type of collision sensor is mechanical sensors, where a sensor body comes into physical contact whereby for example a hall sensor reacts to a magnet being displaced. Another type of collision sensor is based on distance determining, such as optical sensors, time of flight (ToF) sensors, LIDAR sensors or RADAR sensors, whereby a collision is registered when a distance to the object falls below a safety distance (i.e. the robotic lawnmower comes to close to the object).

The robotic lawnmower 100 is in some embodiments arranged to operate according to a map application (indicated in figure 2 and referenced 120A) representing one or more operational areas (and possibly the surroundings of the outdoor operational area(s)) as well as features of the outdoor operational area(s) stored in the memory 120 of the robotic lawnmower 100. In some embodiments, the map is also or alternatively stored in the memory of a server (referenced 240 in figure 2). The map application may be generated or supplemented as the robotic lawnmower 100 operates or otherwise moves around in the outdoor operational area. In some embodiments, the map application is downloaded, possibly from the server. In some embodiments, the map application also includes one or more transport areas. The robotic lawnmower 100 is arranged to navigate according to the map based on the vision sensor 185, the deduced reckoning sensors 180 and/or the satellite navigation sensors 175.

In some embodiments the robotic lawnmower 100 is further configured to store information on the surface condition of an area in the map application 120A. This allows the robotic lawnmower 100 to adapt its behaviour in relation to such an area by comparing its current location to the areas in the map 120A.

In some embodiments the robotic lawnmower is arranged or configured to traverse and operate in outdoor operational areas that are not essentially flat, but contain terrain that is of varying altitude, such as undulating, comprising hills or slopes or such. The ground of such terrain is not flat and it is not straightforward how to determine an angle between a sensor mounted on the robotic lawnmower and the ground. The robotic lawnmower is also or alternatively arranged or configured to traverse and operate in an outdoor operational area that contains obstacles that are not easily discerned from the ground. Examples of such are grass or moss-covered rocks, roots or other obstacles that are close to ground and of a similar colour or texture as the ground.

The outdoor operational area may contain obstacles that are overhanging, i.e. obstacles that may not be detectable from the ground up, such as low hanging branches of trees or bushes. Such a garden is thus not simply a flat lawn to be mowed, but an outdoor operational area of unpredictable structure and characteristics. The outdoor operational area exemplified with referenced to figure 2, may thus be such a nonuniform operational area as disclosed in this paragraph that the robotic lawnmower is arranged to traverse and/or operate in.

Figure 2 shows a robotic lawnmower system 200 in some embodiments. The schematic view is not to scale. The robotic lawnmower system 200 comprises one or more robotic lawnmowers 100 according to the teachings herein arranged to operate in one or more outdoor operational areas 205 possibly bounded by a boundary 220. It should be noted that the outdoor operational area 205 shown in figure 2 is simplified for illustrative purposes.

The view of the outdoor operational area 205 is also intended to be an illustration or graphical representation of the map application 120A discussed in the above.

A server 240 is shown as an optional connected device for the robotic lawnmower 100 to communicate with - possibly for receiving maps or map updates. The server 240 comprises a controller 240A for controlling the operation of the server 240, a memory 240B for storing instructions and data relating to the operation of the server 240 and a communication interface 240C for enabling the server 240 to communicate with other entities, such as the robotic lawnmower 100, and/or a User Equipment such as a mobile phone. In some embodiments the server 240 is implemented as a network server 240 (for example a cloud server). In some embodiments the server 240 is implemented as an application in a mobile telephone, tablet computer or other personal computer. In some embodiments the server 240 is implemented as a network server 240 in combination with an application in a mobile telephone, tablet computer or other personal computer. The controller, the memory and the communication interface may be of similar types as discussed in relation to figure 1 for the robotic lawnmower 100.

As is shown in figure 2 there may be obstacles such as houses (H), structures, trees (T), bushes (B) to mention a few examples in the outdoor operational area 205. In figure 2 such obstacles are indicated and referenced H (as in house), trees (T), bushes (B) and slopes (S) as examples of obstacles and irregularities.

It should be noted that any processing may be done in any, some or all of the controller 110 of the robotic lawnmower 100 and/or the controller 240A of the server 240 and that the processing may also be done partially in one controller 110/240A for supplemental processing in the other controller 110/240A. This is indicated in figure 2A in that a dashed arrow is shown between the server 240 and the robotic lawnmower 100 for indicating that information may be passed freely between them for (partial) processing.

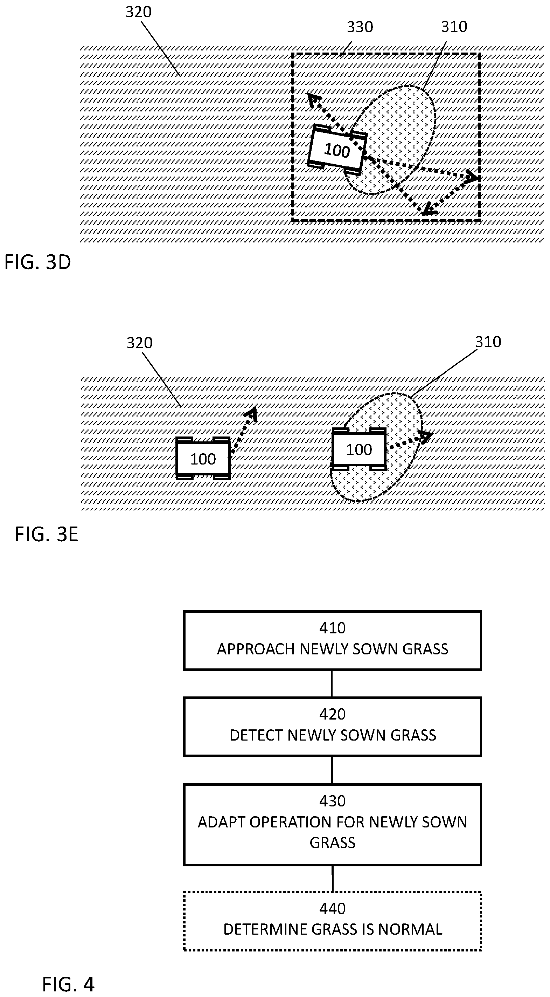

As discussed in the above, the robotic lawnmower 100 may be put to operate in an outdoor operational area that includes area(s) of newly-sown grass. As the inventors have realized, newly-sown grass need to be treated differently than the already growing and thriving grass or the newly-sown grass will not be able to grow properly. In the following simultaneous reference will be given to figure 4 showing a flowchart for a general method for performing the teachings herein in a robotic lawnmower 100.

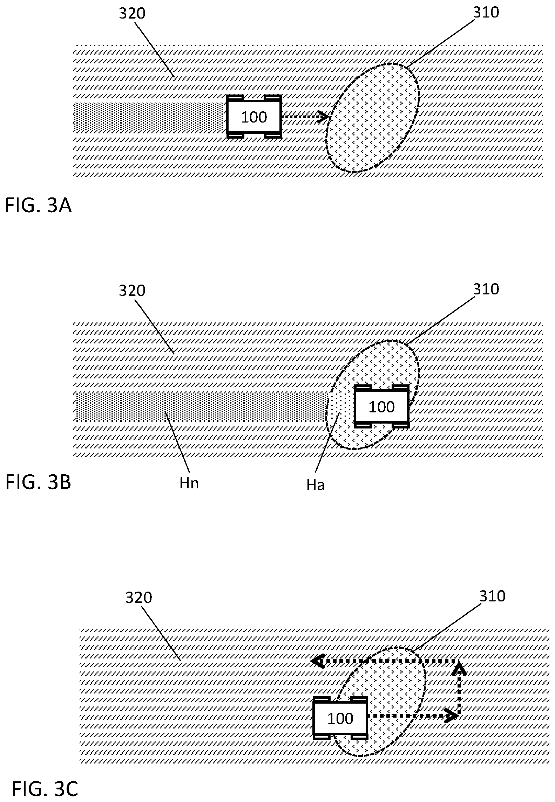

Figure 3A shows an example of a robotic lawnmower 100 approaching an area of newly-sown grass 310 while traversing an area of already growing and thriving grass, which hereafter will be referenced as grass of normal growth.

As the robotic lawnmower 100 approaches 410 the area of newly-sown grass it detects 420 the area of newly-sown grass 310.

In some embodiments the robotic lawnmower 100 is configured to detect 420 the area of newly-sown grass 310 by receiving sensor data from the vision sensor, such as an image or stream of images, and perform analysis on the sensor data in order to detect the newly-sown grass.

In some such embodiments, the newly-sown grass is detected through Artificial Intelligence classification, possibly using segmentation and/or object detection, for example using machine learning (such as a neural network), which classifies the surface structure in front of the robotic lawnmower (or rather in the field of view of the vision sensor 185) as newly-sown grass - if there is newly-sown grass there.

In some such embodiments, the machine learning is trained to classify the surface structure as either grass (area), newly-sown grass (area) or no-operation (area) (for example dirt, tarmac, gravel and so on) - or other depending on the implementation. As the classification is based on machine learning and for the surface in front, the skilled person would understand that classes that are not related to any specific physical object or property can be used. For example, emotions are known to be used for image classification. However, as an alternative terminology, the classes may also be expressed as areas of grass, newly-sown grass, no-operation and so on.

As the inventors have understood, an area of newly-sown grass is not only characterized by the height of the grass. Also, the height of the grass is not a clear indication that the area is newly-sown, it may just have been cut. Furthermore, the density is also not a clear indication for newly-sown grass, but may be an indication of other factors, such as drought, heat, and so on affecting the growth of the grass.

As the skilled persons have understood, by applying AI to classify what is (an area of) newly-sown grass and to train the AI on various images of newly-sown grass in various stages of growth, even subtle differences can become decisive that would otherwise be difficult to define and put in a formula, such as for exceeding a height threshold - as in the prior art.

Furthermore, it may - at some stages be difficult to differentiate between dirt areas and newly-sown grass areas, as the grass sometimes grows in tufts with dirt between the tufts. However, the newly-sown areas may still benefit from being operated as some trimming of the grass during growth may actually increase the growth rate. An AI (model) for classifying can thus be used to also differentiate between dirt (or other areas) and newly-sown grass, so that it is ensured that the areas of newly-sown grass will be operated on (albeit carefully in an adapted manner) and that dirt areas wont be operated on. Simply going by grass height would mean that the dirt areas would be treated the same as the newly-sown grass areas.

An improved manner of detecting the areas of newly-sown of grass is thus provided herein.

In some embodiments the robotic lawnmower 100 is configured to classify the newly-sown grass area as no-operation (dirt or similar) when the confidence level of the analysis for newly-sown grass is below a threshold confidence level - and there is not a classification as grass. This ensures that for example a dirt area is not mistaken for a newly-sown grass area, and also that a fresh newly-sown grass area is not entered too early thereby preventing damage to the fresh newly-sown grass area.

In some embodiments, the robotic lawnmower is further configured to store the location of the detected newly-sown grass as an area of newly-sown grass 310 in the map application at the location of the robotic lawnmower 100.

In some alternative or additional such embodiments, the newly-sown grass is detected through comparing the current location of the robotic lawnmower 100 which location can be determined as discussed herein with regards to map navigation) and compare the location to any areas of newly-sown grass stored in the map application, and if the location of the robotic lawnmower 100 corresponds to (as in being next to or inside) an area of newly-sown grass 310, the area of newly-sown grass 310 is detected. The area of newly-sown grass 310 may have previously been stored in the memory 120 of the robotic lawnmower 100 (or in the memory of the server 240). In some embodiments, the area of newly-sown grass 310 may have been stored in the memory 120 of the robotic lawnmower 100 (or in the memory of the server 240) based on received user input through a user interface, for example being executed in the server 240, possibly as in an application in a smartphone, tablet computer or personal computer. The area of newly-sown grass 310 may thus be roughly indicated by a user, for example by drawing or otherwise indicating the area on a map view of the map application 120A, and later confirmed by the robotic lawnmower 100, whereby also the edge of the area of newly-sown grass 310 is detected more precisely based on for example the satellite sensor 175 of the robotic lawnmower 100.

In some embodiments the robotic lawnmower 100 is further configured to note (store) a first date for the area of newly-sown grass 310 in the map application 120A. The first date may be the date when the area of newly-sown grass 310 is first detected by the vision sensor 310 of the robotic lawnmower or when the area of newly-sown grass 310 is first indicated by the user.

The robotic lawnmower 100 then adapts 430 its operation for the area of newly-sown grass 310.

In some embodiments the adaptation is based on the age of the area of newly-sown grass 310, where the age is determined as the current date/time compared to the first date of the area of newly-sown grass 310 as stored.

In some embodiments the adaptation is also based on a detected grass height in the area of newly-sown grass 310. The grass height is in some embodiments determined based on image analysis on sensor data received through the vision sensor 185.

In some embodiments the adaptation is based on a detected grass density in the area of newly-sown grass 310. The grass density is in some embodiments determined based on image analysis on sensor data received through the vision sensor 185.

The grass height and the grass density, alone or in combination, gives an indication of how well the newly-sown grass is growing and how hard the robotic lawnmower can operate in the area of newly-sown grass 310.

The adaptation is in some embodiments to stay away, and thus turn away from the area of newly-sown grass 310 and not enter it. In some embodiments the robotic lawnmower 100 will thus turn away from the area of newly-sown grass 310 if the age of the area of newly-sown grass is below an age threshold, if the grass height is below a height threshold and/or if the grass density is below a density threshold. The determination relative the thresholds can be done alone or in any combination of some or all of them.

The adaptation is in some embodiments to raise the cutting height from a normal cutting height Hn to an adapted cutting height Ha (see figure 3B). The adapted cutting height is, in some embodiments set to be at least 6 cm. The adapted cutting height is, in some embodiments set to be at least 8 cm. The adapted cutting height is, in some embodiments set to be at least 5-10 cm. The adapted cutting height is, in some embodiments set to be 1, 2, 3, 4 or 5 cm higher than the normal cutting height. In some embodiments the robotic lawnmower 100 will thus adapt the cutting height in the area of newly-sown grass 310 if the age of the area of newly-sown grass is within an age range (wherein, in some embodiments, the age range gives the adapted cutting height), if the grass height is within a height range (wherein, in some embodiments, the height range gives the adapted cutting height) and/or if the grass density is above a density threshold or within a density range (wherein, in some embodiments, the density range gives the adapted cutting height). The determination relative the thresholds can be done alone or in any combination of some or all of them.

The adaptation is in some embodiments to adapt a cutting schedule, where the time for cutting the area of newly-sown grass 310 is adapted to be shorter than compared to the normal grass areas 320. The adaptation of the cutting time is in some embodiments adapted to be shorter by extending the time between operations in the area of newly-sown grass 310, for example by only entering the area of newly-sown grass 310 during every 2^{nd}, 3^{rd} or 4^{th} operation in the operational area 205. The adaptation of the cutting time is in some embodiments adapted to be shorter by decreasing the time of operation in the area of newly-sown grass 310 compared to an area of normal grass 320 of a same or similar size. In some embodiments the robotic lawnmower 100 will thus operate in the area of newly-sown grass 310 for a shorter time if the age of the area of newly-sown grass is below an age threshold, if the grass height is below a height threshold and/or if the grass density is below a density threshold. The determination relative the thresholds can be done alone or in any combination of some or all of them.

The adaptation is in some embodiments to adapt a navigation of the robotic lawnmower 100. In some embodiments the navigation in the area of newly-sown grass 310 is adapted to perform any needed turns outside the area of newly-sown grass and thus only drive straight within the area of newly-sown grass 310. In figure 3C it is shown how the robotic lawnmower 100 only performs turns outside the area of newly-sown grass 310. In some embodiments the navigation in the area of newly-sown grass 310 is adapted to reverse out of the area of newly-sown grass 310 before making a turn. This allows for operation in area of newly-sown grass 310 which border the boundary 220 of the operational area 205.

In some embodiments the navigation in the area of newly-sown grass 310 is adapted to be random in a buffer zone 330, which buffer zone encompasses the area of newly-sown grass 310. This ensures that the robotic lawnmower 100 only turns outside the area of newly-sown grass 310. In some embodiments the buffer zone 330 is arranged so that it is outside the area of newly-sown grass 310 by at least 1, 1.5 or 2 m in all directions. In some embodiments the buffer zone is of a rectangular (square being a special case) shape, an oval (circular being a special case) shape or any other simple shape that is easy to assign and plan around in the map. In figure 3D it is shown how a buffer zone 330 is arranged around the area of newly-sown grass 310 and how the robotic lawnmower 100 operates in a random manner inside the buffer zone thereby only performing turns outside the area of newly-sown grass 310. The buffer zone may be marked by positional coordinates in the map application 120A.

In some embodiments the navigation in the area of newly-sown grass 310 is adapted to perform any needed turns with a longer turning radius, i.e. exceeding a turning threshold level (for example 2-5 meters), inside the area of newly-sown grass 310 and thus turn less sharply than in the areas where the grass is normal 320. And thus to perform turns falling under a turning threshold level outside the area of newly-sown grass. Figure 3E shows how the turning is sharper (shorter turning radius = sharper turning angle) in the normal grass area 320 than in the area of newly-sown grass 310.

In some embodiments the navigation in the area of newly-sown grass 310 is adapted to reverse up slopes. As most robotic lawnmowers 100 are driven on the rear wheels, this reduces the risk of slipping down the slope.

In some embodiments the robotic lawnmower 100 will thus adapt the navigation in the area of newly-sown grass 310 if the age of the area of newly-sown grass is below an age threshold, if the grass height is below a height threshold and/or if the grass density is below a density threshold. The determination relative the thresholds can be done alone or in any combination of some or all of them.

The different navigational adaptations may be done alone or in any combination of some or all of them. For example, in a situation where a side of the area of newly-sown grass 310 is in a corner of the boundary, the navigation of the robotic lawnmower 100 may be adapted so that it performs large radius turns in that corner, but turns outside the area of newly-sown grass 310 in the other portions of the area of newly-sown grass 310.

The different adaptations may be done alone or in any combination of some or all of them.

The robotic lawnmower 100 is further configured, in some embodiments to determine 440 that the area is no longer an area of newly-sown grass 310, but an area of normal grass 320. The determination that the grass is now normal may be done 310 if the age of the area of newly-sown grass is above a normal grass age threshold, if the grass height is above a normal grass height threshold and/or if the grass density is above a normal grass density threshold. The determination relative the thresholds can be done alone or in any combination of some or all of them. As the area is determined to be of normal grass, the area of newly-sown grass 310 is in some embodiments no longer stored, for example by being removed from the map application, and any adaptation is no longer applied to the area.

## Claims

1. A robotic lawnmower system comprising a robotic lawnmower (100) arranged to operate in an outdoor operational area (205), and the robotic lawnmower comprising a vision sensor (185) and a controller (110, 240A), wherein the controller is configured to
detect (420) an area of newly-sown grass (310) by receiving vision sensor data from the vision sensor (185) and perform analysis on the vision sensor data in order to detect newly-sown grass, and
adapt (430) its operation for the area of newly-sown grass (310), wherein the analysis on the vision sensor data includes Artificial Intelligence classification wherein the controller (110, 240A) is further configured to detect the newly-sown grass through the Artificial Intelligence classification classifying the surface structure in a field of view of the vision sensor (185) as newly-sown grass.

2. The robotic lawnmower system (300) according to claim 1, wherein the controller (110, 240A) is further configured to determine (440) that the area of newly-sown grass (310) is no longer an area of newly-sown grass (310), but an area of normal grass (320) and any adaptation is no longer applied.

3. The robotic lawnmower system (300) according to claim 1 or 2, wherein the controller (110, 240A) is further configured to classify the surface structure as either grass, newly-sown grass or no-operation, optionally to classify the newly-sown grass area as no-operation when a confidence level of the analysis for newly-sown grass is below a threshold confidence level.

4. The robotic lawnmower system (300) according to any preceding claim, wherein the controller (110, 240A) is further configured to store a location of the area of newly-sown grass (310) in the map application, as the location where the newly-sown grass is detected and to detect the newly-sown grass through comparing a current location of the robotic lawnmower (100) to a location of any areas of newly-sown grass stored in a map application (120A).

5. The robotic lawnmower system (300) according to claim 4, wherein the controller (110, 240A) is further configured to store a first date for the area of newly-sown grass (310) in the map application (120A), and wherein the adaptation is based on the age of the area of newly-sown grass (310), where the age is determined as a current date compared to the first date of the area of newly-sown grass (310).

6. The robotic lawnmower system (300) according to any preceding claim, wherein the controller (110, 240A) is further configured to detect a grass height based on image analysis on sensor data received through the vision sensor (185) and adapt the operation based on the detected grass height in the area of newly-sown grass (310) and/or to detect a grass density based on image analysis on sensor data received through the vision sensor (185) and adapt the operation based on detected grass density in the area of newly-sown grass (310).

7. The robotic lawnmower system (300) according to any preceding claim, wherein the controller (110, 240A) is further configured to adapt the operation of the robotic lawnmower (100) to stay away from the area of newly-sown grass (310), and thus cause the robotic lawnmower (100) to turn away from the area of newly-sown grass (310) and not enter it.

8. The robotic lawnmower system (300) according to any preceding claim, wherein the controller (110, 240A) is further configured to adapt the operation to by raising a cutting height from a normal cutting height (Hn) to an adapted cutting height (Ha) and/or wherein the controller (110, 240A) is further configured to adapt the operation to by adapting a cutting schedule, where the time for cutting in the area of newly-sown grass (310) is adapted to be shorter than compared to normal grass areas (320),

9. The robotic lawnmower system (300) according to any preceding claim, wherein the controller (110, 240A) is further configured to adapt the operation to by adapting a navigation of the robotic lawnmower (100) with regards to the area of newly-sown grass (310), wherein the controller (110, 240A) is further configured to adapt the navigation for the area of newly-sown grass (310) by performing at least some turns outside the area of newly-sown grass (310), and not inside the area of newly-sown grass (310).

10. The robotic lawnmower system (300) according to claim 9, wherein the controller (110, 240A) is further configured to adapt the navigation for the area of newly-sown grass (310) by reversing out of the area of newly-sown grass (310) before making a turn outside the area of newly-sown grass (310), to adapt the navigation for the area of newly-sown grass (310) to be random in a buffer zone (330), which buffer zone (330) encompasses the area of newly-sown grass (310), and/or to adapt the navigation in the area of newly-sown grass (310) to perform turns with a turning radius exceeding a turning threshold level inside the area of newly-sown grass (310) and perform turns with a turning radius falling under a turning threshold level outside the area of newly-sown grass (310).

11. The robotic lawnmower system (300) according to any of claims 9 or 10, wherein the controller (110, 240A) is further configured to adapt the navigation in the area of newly-sown grass (310) to reverse up slopes.

12. A method for use in a robotic lawnmower system comprising a robotic lawnmower (100) arranged to operate in an outdoor operational area (205), and the robotic lawnmower comprising a vision sensor (185) and a controller (110), and wherein the method comprises the controller (110):
detecting (420) an area of newly-sown grass (310) by receiving vision sensor data from the vision sensor (185) and perform analysis on the vision sensor data in order to detect newly-sown grass, and
adapting (430) its operation for the area of newly-sown grass (310) wherein the analysis on the vision sensor data includes Artificial Intelligence classification wherein the method further comprises the controller (110) detecting the newly-sown grass through the Artificial Intelligence classification classifying the surface structure in a field of view of the vision sensor (185) as newly-sown grass.
